**Europäisches Patentamt**

(19) **European Patent Office**

**Office européen des brevets**

(11) Veröffentlichungsnummer: **0 007 014**
**B1**

(12) **EUROPÄISCHE PATENTSCHRIFT**

(45) Veröffentlichungstag der Patentschrift:
14.07.82

(51) Int. Cl.³: **C 21 D 1/68** // B23K35/22, B21J1/06, C21D1/42

(21) Anmeldenummer: **79101991.2**

(22) Anmeldetag: **18.06.79**

(54) Verfahren zum Verhindern des Aneinanderhaftens von Schmiedestücken.

(30) Priorität: **14.07.78 DE 2830921**

(43) Veröffentlichungstag der Anmeldung:
**23.01.80 Patentblatt 80/2**

(45) Bekanntmachung des Hinweises auf die Patenterteilung:
**14.07.82 Patentblatt 82/28**

(84) Benannte Vertragsstaaten:
**FR GB IT SE**

(56) Entgegenhaltungen:
**DE-B-1 152 000**
**DE-C-937 282**
**FR-A-1 443 028**
**US-A-2 165 635**
**US-A-2 711 966**

(73) Patentinhaber: **BROWN, BOVERI & CIE Aktiengesellschaft Mannheim, Kallstadter Strasse 1, D-6800 Mannheim Käfertal (DE)**

(72) Erfinder: **Dötsch, Erwin, Dr. Dipl.-Ing., Holunderweg 1, D-4600 Dortmund 30 (DE)**
Erfinder: **Pötschke, Jürgen, Dr. Dipl.-Ing., Wortbergeode 13, D-4300 Essen (DE)**
Erfinder: **Knacke, Ottmar, Prof., Am Keilbusch 14, D-5100 Aachen-Verlautenheide (DE)**

Verfahren zum Verhindern des Aneinanderhaftens von Schmiedestücken

Die Erfindung betrifft ein Verfahren zum Verhindern des Aneinanderhaftens von Schmiedestücken aus Eisen oder Eisenlegierungen, deren Oberflächen sich bei erhöhter Temperatur und gleichzeitig unter mechanischem Druck berühren.

In induktiven Schmiedeblockerwärmungsanlagen wird das zu erwärmende Gut in Form einer hintereinanderliegenden Reihe von Blöckchen aus Eisen oder Eisenlegierungen durch die Induktionsspule gestoßen und dabei auf Schmiedetemperatur erwärmt. Dabei tritt in vielen Fällen ein Verkleben der einzelnen Blöckchen an den sich berührenden Stirnflächen auf, was zu Betriebsstörungen führt.

Ursache für dieses Verkleben ist ein Versintern der gegeneinander gedrückten metallischen Blockenden. Dieser Sintervorgang wird begünstigt durch die Erwärmung auf Schmiedetemperatur, durch den Anpreßdruck beim Stoßen durch die Induktionsspule und durch die Zeitdauer, während der Temperatur und Druck einwirken. Einen wesentlichen Einfluß auf den Sintervorgang hat auch die Atmosphäre. Bei bestimmten Sauerstoffpotentialen und Temperaturen wird auf der Eisenoberfläche in einer Chemisorptionsschicht Sauerstoff angelagert, wodurch der Sintervorgang zusätzlich aktiviert wird. Die im Erwärmer auftretenden Temperaturen liegen in der Größenordnung, die zu diesem aktivierten Sintern führt.

Nach dem derzeitigen Stand der Technik verhindert man das Zusammensintern durch Auftragen einer Paste aus hochschmelzenden keramischen Grundstoffen, insbesondere aus Aluminiumoxid, die auch bei hohen Erwärmungstemperaturen für einen ausreichenden Abstand der Metalloberflächen zweier benachbarter Schmiedeblöckchen sorgen, so daß der beschriebene Sintervorgang nicht stattfinden kann. Nachteilig ist bei diesem Verfahren, daß die Keramikbestandteile einer solchen Paste, selbst wenn sie in feinstverteilter Form vorliegen, einerseits zu Verunreinigungen am Schmiedestück, andererseits auf längere Dauer zu Schäden am Schmiedewerkzeug führen.

Der vorliegenden Erfindung liegt die Aufgabe zugrunde, ein Verfahren anzugeben, mit dem diese Sintererscheinungen und die damit verbundenen Nachteile auf einfache, sichere und preiswerte Art vermieden werden können.

Diese Aufgabe wird dadurch gelöst, daß eine aus Wasser und gesiebtem Eisenzunder oder Konverter-Abgasstaub, die überwiegend aus fein verteiltem Eisenoxid bestehen, hergestellte Paste auf die sich berührenden Flächen aufgetragen wird. Der Auftrag erfolgt vorteilhafterweise auf die noch kalten Oberflächen.

Das Auftragen kann vorteilhafterweise mit Hilfe einer preßluftbetriebenen Spritzpistole erfolgen.

Besonders vorteilhafte Ergebnisse lassen sich erzielen, wenn das Eisenoxid mit einer Korngröße zwischen 0,05 mm und 0,5 mm verwendet wird.

Damit ergeben sich die Vorteile, daß das aufgebrachte Material und das Material, aus dem die Oberflächenschicht der Werkstücke selbst besteht, identisch sind, daß es in Form von Zunder- oder Abgasstaub als Abfall bei der Strahlherstellung abfällt und damit in praktisch unbegrenzten Mengen praktisch kostenlos zur Verfügung steht, daß es sich mit Wasser ohne weitere Maßnahmen zu einer spritzfähigen Masse verarbeiten läßt und daß der zeitliche und apparative Aufwand zum Aufbringen der Oxidschicht sehr gering ist. Die so präparierten Oberflächen der Werkstücke sind gegen Sintervorgänge sicher geschützt und trotzdem treten keine Störungen bei der Weiterverarbeitung auf.

**Patentansprüche**

1. Verfahren zum Verhindern des Aneinanderhaftens von Schmiedestücken aus Eisen oder Eisenlegierungen, deren Oberflächen sich bei erhöhter Temperatur und gleichzeitig unter mechanischem Druck berühren, dadurch gekennzeichnet, daß eine aus Wasser und gesiebtem Eisenzunder oder Konverter-Abgasstaub, die überwiegend aus fein verteiltem Eisenoxid bestehen, hergestellte Paste auf die sich berührenden Flächen aufgetragen wird.

2. Verfahren nach Anspruch 1, dadurch gekennzeichnet, daß Eisenoxid mit einer Korngröße zwischen 0,05 mm und 0,5 mm verwendet wird.

3. Verfahren nach den Ansprüchen 1 bis 2, dadurch gekennzeichnet, daß die Paste mit Hilfe einer preßluftbetriebenen Spritzpistole aufgebracht wird.

4. Verfahren nach den Ansprüchen 1 bis 3, dadurch gekennzeichnet, daß die Paste auf die noch kalten Oberflächen aufgetragen wird.

**Claims**

1. Method for preventing forgings of iron or iron alloys from sticking to each other, the surfaces of which come into contact at an elevated temperature and at the same time under mechanical pressure, characterized in that a paste which is produced from water and sieved iron scale or converter exhaust dust consisting predominantly of finely divided iron oxide is is applied to the surfaces that come into contact.

2. Method according to claim 1, characterized in that iron oxide with a grain size between 0.05 mm and 0.5 mm is used.

3. Method according to claims 1 to 2, characterized in that the iron oxide is applied by means of a spray gun operated by compressed air.

4. Method according to claims 1 to 3, characterized in that the finely divided material is applied to the surfaces while they are still cold.

## Revendications

1. Procédé pour empêcher l'adhérence mutuelle de pièces forgées en fer ou en alliages de fer, dont les surfaces se touchent à une température élevée et en même temps sous une pression mécanique, caractérisé par l'application sur les faces en contact d'une pâte préparée à partir d'eau et de paillettes de fer ou de poussière de gaz résiduaires de convertisseurs tamisées, qui sont constituées principalement par un oxyde de fer finement divisé.

2. Procédé selon la revendication 1, caractérisé par l'utilisation d'un oxyde de fer ayant une grosseur de grain comprise entre 0,05 et 0,5 mm.

3. Procédé selon les revendications 1 et 2, caractérisé par l'application de l'oxyde de fer à l'aide d'un pistolet pulvérisateur fonctionnant à l'air comprimé.

4. Procédé selon les revendications 1, 2 et 3, caractérisé par l'application de la matière finement divisée sur les surfaces encore froides.